# EUROPÄISCHE PATENTSCHRIFT

(11) **EP 1 318 955 B1**
(45) Veröffentlichungstag und Bekanntmachung des Hinweises auf die Patenterteilung: **12.01.2005**
(21) Anmeldenummer: 02764755.1
(22) Anmeldetag: 23.07.2002
(51) Int. Cl.: B65G 17/06, B65G 17/38

(54) **PLATTENBANDKETTE**
SLAT CONVEYOR CHAIN
CHAINE DE TRANSPORTEUR A TABLIERS

(30) Priorität: 05.09.2001 DE 20114661 U
(43) Veröffentlichungstag der Anmeldung: 18.06.2003
(73) Patentinhaber: JOH. WINKLHOFER & SÖHNE GmbH & Co KG, D-81369 München (DE)
(72) Erfinder: GRABMANN, Peter, 86968 Hollenbach (DE)
(74) Vertreter: Grünecker, Kinkeldey, Stockmair & Schwanhäusser Anwaltssozietät
(86) Internationale Anmeldenummer: PCT/EP2002/008195
(87) Internationale Veröffentlichungsnummer: WO 2003/022712

(56) Entgegenhaltungen:
- DE-B- 2 713 449
- DE-U- 20 014 013
- FR-A- 1 008 491
- US-A- 2 954 113
- US-A- 3 270 862
- US-A- 5 042 648

## Beschreibung

Die vorliegende Erfindung betrifft eine Plattenbandkette mit an jeweils einer Gelenkstelle miteinander verbundenen Kettengliedern und einem mit diesen verbundenen Plattenband aus mehreren Einzelplatten nach dem Oberbegriff des Anspruchs 1.

Eine gattungsgemäße Transportkette ist aus der US 5,042,648 bekannt. Diese Plattenbandkette basiert auf einer herkömmlichen Hohlbolzen-Gelenkkette mit einer Vielzahl von lösbar befestigten Einzelplatten. Die Einzelplatten weisen an Ihrer Unterseite jeweils einen Zapfen auf, der in den Hohlbolzen der Transportkette eingeführt und auf der Gegenseite der Kette arretiert wird. Dabei ist der Zapfen drehbar im Hohlbolzen der Gelenkstelle gelagert.

Eine weitere.Plattenbandkette ist z.B. aus der DE 295 05 477 U1 bekannt. Die dort beschriebene Plattenbandkette besteht aus gekröpften Kettengliedern, die allesamt gleich aufgebaut sind, wobei an dem schmaleren Ende eine Gelenkhülse eingepresst ist, durch die sich jeweils ein Gelenkbolzen erstreckt, der mit einer Einzelplatte verschweißt ist und auf der gegenüberliegenden Seite durch einen Sicherungsring gehalten wird.

Die Einzelplatten der oben beschriebenen Plattenbandketten weisen auf der einen Stirnseite eine kreissegmentförmige Aussparung auf, in die ein passendes anderes Ende der benachbarten Platte mit geringem Spalt eingreift, so dass ein möglichst geschlossenes Plattenband gebildet wird. Die Platten sind dabei jeweils mittels eines vorstehenden Zapfens mit einer einzigen Gelenkstelle verbunden. Die im Stand der Technik bekannten Plattenbandketten erfordern einen relativ hohen Herstellungs- und Montageaufwand, wobei die Einzelplatten mit einem vorstehenden Zapfen versehen werden müssen, bevor die Plattenbandkette in einem zweiten Arbeitsschritt endgültig montiert wird. In beiden beschriebenen Plattenbandketten sind die Einzelplatten entfembar mit der tragenden Gelenkkette verbunden, was jedoch auch die Gefahr eines unbeabsichtigten Lösens der Einzelplatte von der Gelenkkette einhaltet. Sowohl die Ausbildung der Gelenkkette mit Hohlbolzen als auch die Ausbildung der Gelenkstelle mit Hilfe des vorstehenden Zapfens der Einzelplatte wirken sich nachteilig auf die Eigenschaften der Transportkette aus, beispielsweise bezüglich der Steifigkeit.

Es ist daher die Aufgabe der vorliegenden Erfindung, eine Plattenbandkette der eingangs genannten Art bereitzustellen, die die aus dem Stand der Technik bekannten Nachteile nicht mehr aufweist, sowie bezüglich ihrer Steifigkeit und ihrer Fertigungskosten verbessert ist.

Diese Aufgabe wird erfindungsgemäß durch eine Plattenbandkette nach Anspruch gelöst.

In einem vorbestimmten Mittenabstand ist auf den Gelenkhülsen jeweils eine Laufrolle angeordnet und der vorbestimmte Mittenabstand entspricht dem kleinsten Mittenabstand von zwei Befestigungsstellen von zwei benachbarten Einzelplatten. Es ist jeweils nur dort eine Laufhülse angeordnet, wo im späteren Betrieb auch der Eingriff eines Kettenrades vorgesehen ist. Bevorzugt erfolgt dies im Bereich eines vollwertig ausgestalteten Kettengelenks, dessen Schwenkbewegung durch das Plattenband in den betrieblich vorgegebenen Grenzen nicht behindert ist.

Ein einzelner Gelenkbolzen steht an einer Seite über die Außenseiten der Außenlaschen über und ist mittels des überstehenden Endbereiches mit einer der Einzelplatten verbunden Hierdurch wird eine einfache Befestigung ermöglicht, die einseitig am Gelenkbolzen erfolgt, wodurch sich die Steifigkeit der Kette erhöht und gleichzeitig die Fertigungskosten verringern. In einer gattungsgemäßen Ausführung in der sich Außenkettenglieder mit parallelen Außenlaschen und quer zu den Außenlaschen parallel angeordneten Gelenkbolzen und Innenkettenglieder mit innerhalb von den Außenlachen parallel angeordneten Innenlaschen und quer zu den Innenlaschen parallel angeordneten Gelenkhülsen abwechseln und der kleinste Mittenabstand von zwei Befestigungsstellen von zwei benachbarten Einzelplatten größer ist als der Mittenabstand von zwei benachbarten Gelenkbolzen können, durch die Verwendung nicht gekröpfter Kettenglieder zumindest einseitig die Außenlaschen als Auflage bzw. seitliche Kippverhinderung dienen.

Wie in der US 5,042,648 wird für die Plattenbandkette eine Laschenkette "normaler" Bauart mit sich abwechselnden Innen- und Außenkettengliedem verwendet. Allein hierdurch wird die Steifigkeit der Kette gegenüber gekröpften Kettengliedern beträchtlich erhöht. Auch lassen sich diese Plattenbandketten, da für die Kettenglieder an sich keine Sonderteile verwendet werden müssen, sehr kostengünstig herstellen. Darüber hinaus hat die Plattenbandkette noch den Vorteil, dass der Mittenabstand von zwei benachbarten Gelenkbolzen nicht auch gleichzeitig der Mittenabstand von zwei Befestigungsstellen der Einzelplatten ist. Hier finden Kettenglieder mit kleinerer Teilung für den Antrieb eines Plattenbandes mit größerer Teilung Anwendung. Das hat zur Folge, dass bei bestehenden Plattenbandkettentrieben eine neue Plattenbandkette mit gleich großem Plattenband eingesetzt wird, die jedoch eine kleinere Zahnteilung benötigt und damit für einen ruhigeren Lauf sorgt. Darüber hinaus wird eine Art Übersetzung erzeugt. Besonders günstig ist die Variante, bei der eine Einzelplatte an einer Befestigungsstelle mit jeweils einem einzigen Gelenkbolzen verbunden ist und nur jeder zweite Gelenkbolzen eine Verbindungsstelle mit einer Einzelplatte aufweist. Bei gleichem Plattenband könnte demnach eine Laschenkette mit doppelt so kleiner Teilung, wie bei einer vorher eingesetzten Plattenbandkette mit gekröpften Kettengliedem eingesetzt werden.

Durch diese Ausgestaltung der Einzelplatten funktioniert nur jedes zweite Gelenk als vollwertiges Gelenk, während die zwischenliegenden Gelenke versteift sein können (z.B. durch die Einzelplattenform). Hierdurch verhält sich die Kette so, als würde sie eine größere Teilung für den Eingriff eines Kettenrades aufweisen.

Gemäß einer Ausführungsform kann eine Einzelplatte ausschließlich mit einem einzigen Endbereich eines Gelenkbolzens verbunden sein. Die Befestigung erfolgt demnach ausschließlich einseitig an dem Gelenkbolzen.

Hierzu ist es von Vorteil, wenn die Einzelplatten jeweils senkrecht zu den Gelenkbolzen und parallel zu den Außen- und Innenlaschen der Kettenglieder angeordnet sind. Hierdurch lässt sich die Einzelplatte auch sehr einfach mit einem Endbereich eines Gelenkbolzens verbinden. Bevorzugt erfolgt die Anbringung durch eine Pressverbindung. Aber auch Schweißen, Verlöten und Kleben sind möglich.

Eine günstige Ausgestaltung sieht vor, dass jede zweite Geienkhülse eine Laufrolle aufweist. Ein zugehöriges Kettenrad greift demnach nur in jeden zweiten Zwischenraum der Kettenglieder ein, wobei der Verschleiß durch die Laufrolle, wie bei bekannten Rollenketten minimiert wird.

Günstigerweise erfolgt die Anordnung der Laufrolle an dem Gelenk so, dass dessen Gelenkbolzen mit einer Einzelplatte verbunden ist.

Des Weiteren bezieht sich die Erfindung auf einen Plattenbandkettentrieb mit einer Plattenbandkette nach einem der Ansprüche 1 bis 7 und einem Kettenrad, wobei die Teilung des Kettenrades um ein ganzzahliges Vielfaches größer ist als der Mittenabstand der Gelenkbolzen der Plattenbandkette.

Betrachtet man z. B. bislang verwendete Antriebseinheiten für Plattenbandketten, die mit einer Plattenbandkette aus gekröpften Kettengliedern besteht, so könnte diese Plattenbandkette im Reparaturfall durch eine Plattenbandkette der erfindungsgemäßen Bauart ausgetauscht werden. Es wäre demnach keine Modifikation an den Kettenrädem oder anderen Antriebsbestandteilen von Nöten. In diesem Austauschprinzip ist eine Idee verankert, die in der Art bislang im Stand der Technik keinen Niederschlag gefunden hat. Trotz anderem Aufbau könnte die Plattenbandkette jederzeit an bereits bestehenden Teilen von Antriebselementen, insbesondere Kettenrädem bei vorhandenen Plattenbandförderem, eingesetzt werden. Insbesondere hinsichtlich Verdrehung ist aber die erfindungsgemäße Plattenbandkette stabiler ausgeführt. Des Weiteren lässt sich eine solche kette durch einen bereits bestehenden Montageablauf fertigen, da keine Sonderteile Anwendung finden.

In einer Weiterbildung könnte auch vorgesehen werden, dass Gelenkbolzen gleicher Länge verwendet werden. Während die Gelenkbolzen zur Anbringung der Einzelplatten auf der einen Seite der Kettenglieder vorstehen, könnten die Kettenbolzen, die für eine solche Anbringung nicht benötigt werden, auf der gegenüberliegenden Seite der Kettenglieder vorstehen. Sie könnten z. B. beim Aufsetzen der einzelplatten nach unten gedrückt werden. Dies könnte selbstverständlich auch vorher erfolgen. In den meisten Fällen werden die vereinzelt nach unten vorstehenden Gelenkbolzen in den Förderkanälen für eine Plattenbandkette nicht störend wirken und könnten auch in vorhandenen Anlagen eingesetzt werden.

Im Folgenden wird ein Ausführungsbeispiel der vorliegenden Erfindung anhand einer Zeichnung näher erläutert. Es zeigen:
Fig. 1 eine erfindungsgemäße Plattenbandkette in einer Draufsicht und
Fig. 2 die Plattenbandkette aus Fig. 1 im Vollschnitt.

Die in den Figuren dargestellte Plattenbandkette 1 weist abwechselnd aneinander gereihte Innenkettenglieder 2 und Außenkettenglieder 3 auf. Die Innenkettenglieder 2 bestehen aus zwei parallel zueinander im Abstand angeordneten Innenlaschen 4 und zwei diese miteinander verbindenden, im parallelen Abstand zueinander angeordneten Gelenkhülsen 5. Die Endbereiche der Gelenkhülsen 5 sind jeweils in die Innenlaschen 4 eingepresst und verlaufen senkrecht zu den Innenlaschen 4. Auf einer der Gelenkhülsen 5 ist eine drehbare Laufrolle 6 angeordnet.

Die Außenkettenglieder 3 bestehen aus zwei im parallelen Abstand zueinander angeordneten Außenlaschen 7 und zwei diese miteinander verbindenden, parallel zueinander angeordneten Gelenkbolzen 8 und 9. Die Gelenkbolzen 8 und 9 verlaufen senkrecht zu den Außenlaschen 7 und sind in diese eingepresst. Die Außenlaschen 7 befinden sich jeweils außerhalb bzw. an den Außenseiten der Innenkettenglieder 2. Der Gelenkbolzen 9 steht an einer Seite über die Außenseite der Außenlasche 7 über. Auf diesem überstehenden Endbereich 10 ist eine Einzelplatte 11 aufgepresst, die parallel zu den Außenlaschen 7 auf deren Außenseite angeordnet ist. Die Einzelplatte 11 erstreckt sich somit in ihrer Hauptrichtung rechtwinklig zur Gelenkbolzenachse A. Jeweils ein Gelenkbolzen 8 bzw. 9 und eine Gelenkhülse 5 bilden zusammen ein Kettengelenk G bzw. G'. Die Einzelplatte 11 ist dicker ausgeführt, als die Laschen 4 bzw. 7, damit eine stabilere Presspassung mit dem Endbereich 10 des Gelenkbolzens 9 bereitgestellt werden kann.

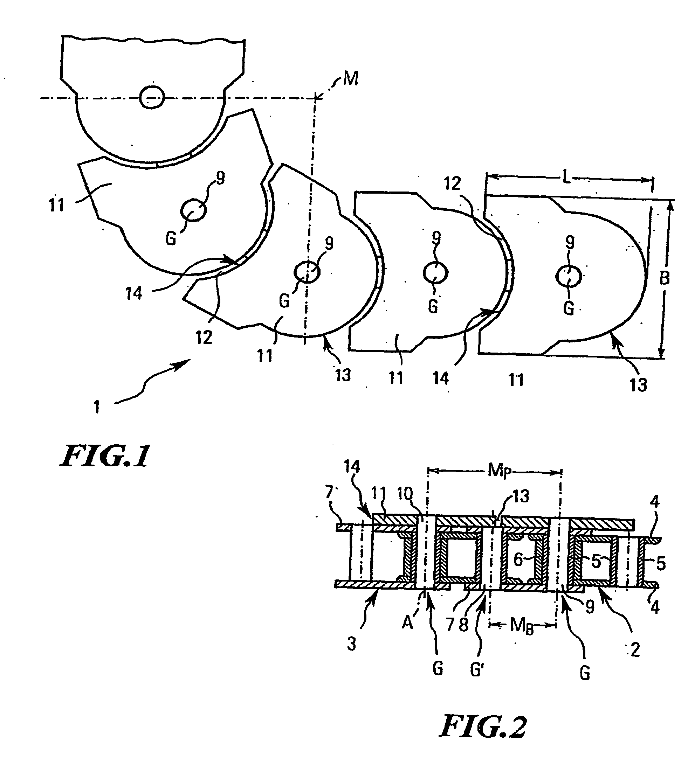

Anhand der Fig. 2 ist zu erkennen, dass nur jeder zweite Gelenkbolzen 9 übersteht und mit einer Einzelplatte 11 verbunden ist. Genau um diesen Gelenkbolzen 9 ist auch jeweils eine Laufrolle 6 auf der zugehörigen Gelenkhülse 5 angeordnet. Die anderen Gelenkhülsen 5 sind jeweils ohne Laufrolle ausgestaltet. Die Gelenkbolzen 8 sind so ausgeführt, dass sie keinen Überstand aufweisen. Hier besteht jedoch die Möglichkeit, dass die Bolzen sämtlich die gleiche Länge aufweisen, wie die Bolzen 9 und dass im Bereich der Gelenke G' der Überstand nach unten durchgedrückt wird, so dass diese Bolzen auf der gegenüberliegenden Seite überstehen. Hierdurch würde die Teilevielfalt nochmals reduziert.

Der Mittenabstand M_{B} ist auf Faktor 2 kleiner, als der Mittenabstand M_{P} der in den Einzelplatten 11 befestigten Endbereiche 10 (Befestigungsstelle der Einzelplatten 11).

Die Bolzen 8, 9, die Gelenkhülsen 5 und die Laufrollen 6 sind zylindrisch bzw. zylindermantelförmig ausgestaltet und die Innen- und außenlaschen 4 bzw. 7 weisen eine Form auf, wie sie bei üblichen Rollenketten bekannt ist.

In der Draufsicht gemäß Fig. 1 ist die Form der Einzelplatten 11, und wie diese ein zusammenhängendes Plattenband bilden, dargestellt. Die Einzelplatten 11 weisen eine Länge L auf, die etwas kleiner ist, als der Mittenabstand M_{P}, so dass zwischen den einzelnen Einzelplatten 11 ein Spalt 12 verbleibt. Die Breite B der Einzelplatten 11 ist wesentlich größer als die Breite der zugehörigen Laschen 4 und 7 der Innenkettenglieder 2 und Außenkettenglieder 3. Das in Fig. 1 dargestellte rechte Stirnende 13 der Einzelplatte ist halbkreisförmig ausgestaltet, wohingegen das gegenüberliegende Stimende 14 eine Aussparung aufweist, so dass bei Aneinanderreihung der Einzelplatten 11 der bogenförmige Spalt 12 gebildet wird. Die Einzelplatten 11 lassen sich dann um die Gelenke G verschwenken. Die dazwischenliegenden Gelenke G' sind in ihrer Schwenkbewegung durch die Ausgestaltung der Einzelplatten 11 stärker beeinträchtigt. Eine Verschwenkung kann lediglich im Rahmen der Spaltbreite des Spaltes 12 erfolgen. Man könnte in diesem Zusammenhang von einer Versteifung der Gelenke G' sprechen. In Fig. 1 ist schematisch der Mittelpunkt M eines Kettenrades dargestellt, das in die Innenkettenglieder 2 eingreift. Die Teilung eines solchen Kettenrades ist so, dass die Zähne nur in jeden zweiten Zwischenraum eingreifen, so dass die antreibende Zahnflanke immer mit einer Laufrolle 6 in Berührung kommt, wohingegen die Gelenkhülse 5 ohne Laufrolle nicht mit dem Kettenrad im Eingriff steht.

Durch diese Ausgestaltung ist es möglich, die Kette gemäß der dargestellten Ausführungsform anstelle einer Plattenbandkette einzusetzen, die bislang doppelt so lange Kettenglieder aufwies und deren Gelenke doppelt so weit voneinander beabstandet waren (z.B. gekröpfte Plattenbandkette gemäß DE 295 05 477 U1). Der Einsatz einer solchen neuen Plattenbandkette 1 erfordert daher keinen Umbauvorgang, sondern kann auf vorhandene Antriebselemente (insbesondere die bereits vorhandenen Kettenräder) zurückgreifen. Hierdurch eignet sich diese Plattenbandkette hervorragend zum Austausch gegen eine bereits vorhandene Plattenbandkette, die jedoch nicht so verdrehsteif ist, wie die erfindungsgemäß aufgebaute Plattenbandkette. Des Weiteren lässt sich die erfindungsgemäße Plattenbandkette 1 sehr einfach herstellen, da nicht auf Sonderbauelemente (z.B. gekröpfte Laschen) zurückgegriffen werden muss. Der Montagevorgang erfolgt ähnlich wie bei einer üblichen Rollenkette. Durch die Tatsache, dass das Plattenband senkrecht zu einer Antriebsachse der antreibenden Kettenräder verläuft, kann ein flacher Einbau weiterhin erfolgen. Sollten gemäß einer Variante auf der gegenüberliegenden Seite jeder zweite Gelenkbolzen überstehen, damit alle Gelenkbolzen die gleiche Länge aufweisen, so stellt dies bei den bislang verwendeten Führungskonstruktionen (insbesondere Führungsschienen bzw. Führungsprofilen) kein Problem dar, da der Platz ausreichend hierfür vorhanden ist.

## Patentansprüche

1. Plattenbandkette (1) mit an jeweils einer Gelenkstelle (G,G') miteinander verbundenen Kettengliedern (2,3) und einem mit diesen verbundenen Plattenband aus mehreren Einzelplatten (11), wobei jede Gelenkstelle (G,G') von einem Gelenkbolzen (8,9) des einen Kettengliedes (3) und einer den Gelenkbolzen (8,9) aufnehmenden Gelenkhülse (5) des benachbarten Kettengliedes (2) gebildet ist und eine Einzelplatte (11) an einer Befestigungsstelle mit einem Gelenkbolzen (9) verbunden ist, wobei sich Außenkettenglieder (3) mit parallelen Außenlachen (7) und quer zu den Außenlaschen (7) parallel angeordneten Gelenkbolzen (8,9) und Innenkettengliedern (2) mit innerhalb von den Außenlaschen (7) parallel angeordneten Innenlaschen (4) und quer zu den Innenlaschen (4) parallel angeordneten Gelenkhülsen (5) abwechseln und der kleinste Mittenabstand (M_{P}) von zwei Befestigungsstellen von zwei benachbarten Einzelplatten (11) größer ist als der Mittenabstand (M_{B}) von zwei benachbarten Gelenkbolzen (8,9), **dadurch gekennzeichnet, dass** nur jeweils in einem vorbestimmten Mittenabstand (M_{P}) auf den Gelenkhülsen (5) eine Laufrolle (6) angeordnet ist und der vorbestimmte Mittenabstand dem kleinsten Mittenabstand (M_{P}) von zwei Befestigungsstellen von zwei benachbarten Einzelplatten (11) entspricht.

2. Plattenbandkette (1) nach Anspruch 1, wobei der kleinste Mittenabstand (M_{P}) von zwei Befestigungsstellen von zwei benachbarten Einzelplatten (11) um ein ganzzahliges Vielfaches größer ist als der Mittenabstand (M_{B}) von zwei benachbarten Gelenkbolzen (8,9).

3. Plattenbandkette (1) nach Anspruch 2, **dadurch gekennzeichnet, dass** eine Einzelplatte (11) an einer Befestigungsstelle mit jeweils einem einzigen Gelenkbolzen (9) verbunden ist und nur jeder zweite Gelenkbolzen (9) eine Verbindung mit einer Einzelplatte (11) aufweist.

4. Plattenbandkette (1) nach einem der Ansprüche 1 bis 3, **dadurch gekennzeichnet, dass** eine Einzelplatte (11) ausschließlich mit einem einzigen Endbereich (10) eines Gelenkbolzens (9) verbunden ist.

5. Plattenbandkette (1) nach einem der Ansprüche 1 bis 4, **dadurch gekennzeichnet, dass** die Einzelplatten (11) jeweils senkrecht zu den Gelenkbolzen (9) und parallel zu den Außen- und Innenlaschen (4,7) der Kettenglieder (2,3) angeordnet sind.

6. Plattenbandkette (1) nach einem der Ansprüche 1 bis 5, **dadurch gekennzeichnet, dass** jede zweite Gelenkhülse (5) eine Laufrolle (6) aufweist.

7. Plattenbandkette (1) nach Anspruch 6, **dadurch gekennzeichnet, dass** die Laufrolle (6) an der Gelenkstelle (G) angeordnet ist, dessen Gelenkbolzen (9) mit einer Einzelplatte (11) verbunden ist.

8. Plattenbandkettentrieb mit einer Plattenbandkette (1) nach einem der Ansprüche 1 bis 7 und einem Kettenrad, wobei die Teilung des Kettenrades um ein ganzzahliges Vielfaches größer ist als der Mittenabstand (M_{B}) der Gelenkbolzen (8,9) der Plattenbandkette (1).

## Claims

1. Slat conveyor chain (1) comprising chain links (2, 3) connected to one another at a hinge point (G, G') in each case and a slat conveyor connected to the latter and comprising a plurality of individual slats (11), each hinge point (G, G') being formed by a hinge pin (8, 9) of one chain link (3) and a hinge sleeve (5) belonging to the adjacent chain link (2) and accommodating the hinge pin (8, 9), and an individual slat (11) being connected to a hinge pin (9) at a fixing point, outer chain links (3) with parallel outer link plates (7) and hinge pins (8, 9) arranged in parallel transversely with respect to the outer link plates (7) alternating with inner chain links (2) having inner link plates (4) arranged in parallel within the outer chain plates (7) and hinge sleeves (5) arranged in parallel transversely with respect to the inner link plates (4), and the smallest centre spacing (M_{P}) of two fixing points of two adjacent individual slats (11) being greater than the centre spacing (M_{B}) of two adjacent hinge pins (8, 9), **characterized in that** a running roller (6) is arranged in each case only at a predetermined centre spacing (Mp) on the hinge sleeves (5), and the predetermined centre spacing corresponds to the smallest centre spacing (M_{P}) of two fixing points of two adjacent individual slats (11).

2. Slat conveyor chain (1) according to Claim 1, the smallest centre spacing (M_{P}) of two fixing points of two adjacent individual slats (11) being greater by an integer multiple than the centre spacing (M_{B}) of two adjacent hinge pins (8, 9).

3. Slat conveyor chain (1) according to Claim 2, **characterized in that** an individual slat (11) is connected to a single hinge pin (9) in each case at a fixing point, and only each second hinge pin (9) has a connection to an individual slat (11).

4. Slat conveyor chain (1) according to one of Claims 1 to 3, **characterized in that** an individual slat (11) is connected only to a single end region (10) of a hinge pin (9).

5. Slat conveyor chain (1) according to one of Claims 1 to 4, **characterized in that** the individual plates (11) are in each case arranged at right angles to the hinge pins (9) and parallel to the outer and inner link plates (4, 7) of the chain links (2, 3).

6. Slat conveyor chain (1) according to one of Claims 1 to 5, **characterized in that** each second hinge sleeve (5) has a running roller (6).

7. Slat conveyor chain (1) according to Claim 6, **characterized in that** the running roller (6) is arranged at the hinge point (G) whose hinge pin (9) is connected to an individual slat (11).

8. Slat conveyor chain drive comprising a slat conveyor chain (1) according to one of Claims 1 to 7 and a chain wheel, the pitch of the chain wheel being an integral multiple greater than the centre spacing (M_{B}) of the hinge pins (8, 9) of the slat conveyor chain (1).

## Revendications

1. Chaîne à tablier (1) comportant des maillons (2, 3) reliés entre eux au niveau de points d'articulation respectifs (G, G') et un tablier relié à ces maillons et formé par plusieurs plaques individuelles (11), dans laquelle chaque point d'articulation (G, G') est formé par un axe d'articulation (8, 9) d'un maillon (3) et d'une douille d'articulation (5), logeant l'axe d'articulation (8, 9), du maillon voisin (2), dans laquelle une plaque individuelle (11) est reliée au niveau d'un point de fixation à un axe d'articulation (9), et dans laquelle des maillons extérieurs (3), comportant des pattes extérieures parallèles (7) et des axes d'articulation (8, 9) disposés en parallèle de manière transversale aux pattes extérieures (7), et des maillons intérieurs (2), comportant des pattes intérieures (4) disposées parallèlement à l'intérieur des pattes extérieures (7), et des douilles d'articulation (5), disposées en parallèle de manière transversale aux pattes intérieures (4) alternent et la plus petite distance centre-à-centre (M_{P}) de deux points de fixation de deux plaques individuelles voisines (11) est supérieure à la distance centre-à-centre (M_{B}) de deux axes d'articulation voisins (8, 9), **caractérisée en ce qu'**un galet de roulement (6) est respectivement disposé uniquement à une distance centre-à-centre prédéterminée (M_{P}) sur les douilles d'articulation (5) et que la distance centre-à-centre prédéterminée correspond à la plus petite distance centre-à-centre (Mp) de deux points de fixation de deux plaques individuelles voisines (11).

2. Chaîne à tablier (1) selon la revendication 1,
dans laquelle la distance centre-à-centre la plus petite (M_{P}) de deux points de fixation de deux plaques individuelles voisines (11) est supérieure d'un multiple entier à la distance centre-à-centre (M_{B}) de deux axes d'articulation voisins (8, 9).

3. Chaîne à tablier (1) selon la revendication 2, **caractérisée en ce qu'**une plaque individuelle (11) est reliée, au niveau d'un point de fixation, à un seul axe d'articulation respectif (9) et que seul chaque second axe d'articulation (9) comporte une liaison avec une plaque individuelle (11).

4. Chaîne à tablier (1) selon l'une des revendications 1 à 3, **caractérisée en ce qu'**une plaque individuelle (11) est reliée exclusivement à une seule partie d'extrémité (10) d'un axe d'articulation (9).

5. Chaîne à tablier (1) selon l'une des revendications 1 à 4, **caractérisée en ce que** les plaques individuelles (11) sont respectivement disposées perpendiculairement aux axes d'articulation (9) et parallèlement aux pattes intérieures et extérieures (4, 7) des maillons (2, 3).

6. Chaîne à tablier (1) selon l'une des revendications 1 à 5, **caractérisée en ce que** chaque seconde douille d'articulation (5) comporte un galet de roulement (6).

7. Chaîne à tablier (1) selon la revendication 6, **caractérisée en ce que** le galet de roulement (6) est disposé au niveau du point d'articulation (G) dont l'axe d'articulation (9) est relié à une plaque individuelle (11).

8. Dispositif d'entraînement de chaîne à tablier comportant une chaîne à tablier (1) selon l'une des revendications 1 à 7 et une roue à chaîne, le pas de la roue à chaîne étant supérieur, d'un multiple entier, à la distance centre-à-centre (M_{B}) des axes d'articulation (8, 9) de la chaîne à tablier (1).
